# EUROPÄISCHE PATENTSCHRIFT

(11) **EP 1 086 662 B1**
(45) Veröffentlichungstag und Bekanntmachung des Hinweises auf die Patenterteilung: **16.11.2005**
(21) Anmeldenummer: 00117770.8
(22) Anmeldetag: 18.08.2000
(51) Int. Cl.: A61C 8/00, A61C 13/00, A61C 13/225, A61C 13/271

(54) **Implantatgetragene Zahnprothese und Verfahren zu ihrer Herstellung**
Dental prosthesis mounted on implant and method of fabricating the same
Prothèse dentaire supportée par un implant ainsi que son procédé de fabrication

(30) Priorität: 22.09.1999 DE 19945354
(43) Veröffentlichungstag der Anmeldung: 28.03.2001
(73) Patentinhaber: DeguDent GmbH, 63457 Hanau (DE)
(72) Erfinder: Grote, Pascale, 63450 Hanau (DE); May, Dietmar, Dr., 44534 Lünen (DE); Groll, Werner, Dr., 63755 Alzenau (DE); Kremer, Egbert, 63454 Hanau (DE)
(74) Vertreter: Stoffregen, Hans-Herbert

(56) Entgegenhaltungen:
- EP-A- 0 843 989
- US-A- 3 672 058
- US-A- 5 049 073
- US-A- 5 556 280
- US-A- 5 674 072

## Beschreibung

Die Erfindung bezieht sich auf eine implantatgetragene Zahnprothese mit mehreren, jeweils in einer Aufnahmebohrung eines enossalen Implantats aufgenommenen Aufbaupfosten, die jeweils einen okklusalen Konuszapfen zur Verbindung mit der Zahnprothese aufweisen, mit in den Basalausnehmungen des Grundkörpers der Zahnprothese eingebetteten Konuskappen, die jeweils eine in ihrer Form an den zugeordneten Konuszapfen angepasste Konusbohrung aufweisen.

Enossale Implantate, die jeweils mit einem Aufbaupfosten versehen sind, werden in zunehmendem Maße zur Verankerung von Zahnprothesen eingesetzt. Die Verwendung von Konuspfosten, die mit einem Konusabschnitt form- und kraftschlüssig in eine entsprechende Konusbohrung des Implantats eingesetzt und mittels einer zentralen Schraube gesichert werden (EP 0 707 835 A1), hat gegenüber anderen, geometrisch verzahnten Verbindungsarten den Vorteil, daß eine hohe Positionsstabilität bei Belastung gewährleistet ist und eine Drehausrichtung in jede gewünschte Position möglich ist. Letzteres ist besonders vorteilhaft bei Aufbaupfosten, deren zur Verbindung mit der Zahnprothese vorgesehener okklusaler Aufbauzapfen abgewinkelt ist. Darüber hinaus ist die Konusverbindung zwischen dem enossalen Implantat und dem Aufbaupfosten spaltfrei und bakteriendicht.

Wenn solche Aufbaupfosten nur dazu dienen sollen, schleimhautgetragene Zahnprothesen zu stabilisieren und zu halten, so wird eine Ausführung als Magnetanker oder Kugelanker gewählt. In beiden Fällen wird jeweils ein Ankerelement in die Prothese eingebettet, das eine lösbare Verbindung mit dem Kopf des Aufbaupfostens mittels einer magnetischen Verbindung oder einer Kugelkopfverbindung ermöglicht. Eine feste, tragende Verbindung zwischen der Zahnprothese und den Aufbaupfosten, bei der alle auftretenden Kräfte über die Aufbaupfosten an den Implantaten abgestützt werden, erfolgt hierbei jedoch nicht.

Für die implantatgetragene Ausführung von Zahnprothesen ist die Konuskronentechnik ein bewährtes Verfahren. Dabei wird an jedem Aufbaupfosten ein okklusaler Konuszapfen vorgesehen, der der kraftübertragenden Verbindung mit der Zahnprothese dient.

Üblicherweise wird in der zahnärztlichen Praxis ein Abdruck genommen, durch den die Position aller Konuszapfen festgelegt wird. Von diesem Abdruck wird vom Zahntechniker im Labor ein Analogmodell erstellt. Der Zahntechniker modelliert auf dem Konuszapfen eine Primärkrone in Wachs und fräst sie mit Hilfe eines Fräsgeräts im entsprechenden Konuswinkel vor. Sodann wird die Primärkrone angestiftet und eingebettet; sie wird gegossen, ausgebettet, abgestrahlt und aufgepaßt. Die Primärkrone wird nachgefräst und poliert. Auf der Primärkrone wird mit Modellierkunststoff und Wachs eine Sekuhdärkrone angefertigt, und zwar als Verblendbrücke, als Kappen ohne Retention zum Verkleben in einem Metallgerüst oder als Kappe mit Retention zum Einarbeiten in Prothesen. Die Sekundärkrone wird angestiftet und eingebettet; sie wird gegossen, ausgebettet, abgestrahlt und aufgepaßt.

Diese Herstellung erfordert einen erheblichen Arbeitsaufwand im zahntechnischen Labor und in der zahnärztlichen Praxis; es sind mehrfache Zahnarztbesuche des Patienten erforderlich.

Aus der US-A-5 556 280 ist eine gattungsgemäße implantatgetragene Zahnprothese bekannt. In dem Grundkörper der Zahnprothese sind aus Metall bestehende Konuskappen eingelassen, die auf aus Acryl bestehende Kappen aufsetzbar sind, die ihrerseits lösbar mit den Aufbaupfosten verbunden sind.

Aufgabe der Erfindung ist es, eine implantatgetragene Zahnprothese der eingangs genannten Art so weiterzubilden, dass diese ohne Abdrucknahme, Modellherstellung und Fräs- sowie Gießtechnik im zahntechnischen Labor mit vorgefertigten Teilen direkt im Mund des Patienten fertig verarbeitet werden kann.

Erfindungsgemäß wird die Aufgabe dadurch gelöst, dass jede Konuskappe in eine Basalausnehmung ragt, die allseitig größer als die aufzunehmende Konuskappe und mit einer seitlichen Füllöffnung versehen ist.

Die Verwendung von eingebetteten Konuskappen als Verbindungselemente zwischen den Konuszapfen der Aufbaupfosten und der Zahnprothese ermöglicht es, mit vorgefertigten Teilen und insbesondere ohne vorherige Abdrucknahme und Modellherstellung in einer einzigen Sitzung die Zahnprothese fertigzustellen, indem die Konuskappen in ihrer auf den Konuszapfen angeordneten Stellung durch herkömmliche Techniken mit dem Grundkörper der Prothese zu verbinden, insbesondere durch Verklebung oder Einpolymerisieren. Insbesondere entfällt die Notwendigkeit, auf dem Konuszapfen des Aufbaupfostens eine Primärkrone zu modellieren, sie herzustellen und zu bearbeiten. Dadurch entfällt jegliche Notwendigkeit, nach der Herstellung der eigentlichen Zahnprothese und dem Anpassen in der zahnärztlichen Praxis noch irgendeine weitere Arbeit im zahntechnischen Labor durchzuführen. Jegliche Abdrucknahme und Modellherstellung entfallen.

Durch die Verwendung von ausschließlich vorgefertigten Teilen entfallen die Nachteile und Schwierigkeiten, die sich durch das Expansionsverhalten von Einbettmassen ergeben. Die aufwendige Modellierung von Primär- und Sekundärteilen entfällt, ebenso das zeitraubende Ausarbeiten der Sekundärteile. Gußfehler werden vermieden. Bei verhältnismäßig geringem Materialeinsatz wird die Menge der Verbrauchsmaterialien ebenfalls reduziert. Die erzielte Paßgenauigkeit ist gleichbleibend hoch.

Die Ausrichtung des Konuszapfens wird durch die freie Positionierung von geraden und abgewinkelten Aufbaupfosten in der Konusbohrung des Implantats optimal erreicht.

Vorzugsweise sind an der Außenseite der Konuskappen Retentions-Vorsprünge vorgesehen, die eine erhöhte Verankerung der Konuskappen im Grundkörper der Zahnprothese ermöglichen. Hierbei kann es sich beispielsweise um umlaufende Wülste handeln.

Nachfolgend wird ein Ausführungsbeispiel der Erfindung näher beschrieben, das in der Zeichnung dargestellt ist. Es zeigt:
Fig. 1 in einem Längsschnitt einen in einem Implantat eingesetzten Aufbaupfosten, der eine Konuskappe trägt,
Fig. 2-6 jeweils in einem senkrechten Schnitt aufeinanderfolgende Schritte bei der Herstellung einer implantatgetragenen Zahnprothese und
Fig. 7 die fertiggestellte Zahnprothese, ebenfalls in einem senkrechten Schnitt.

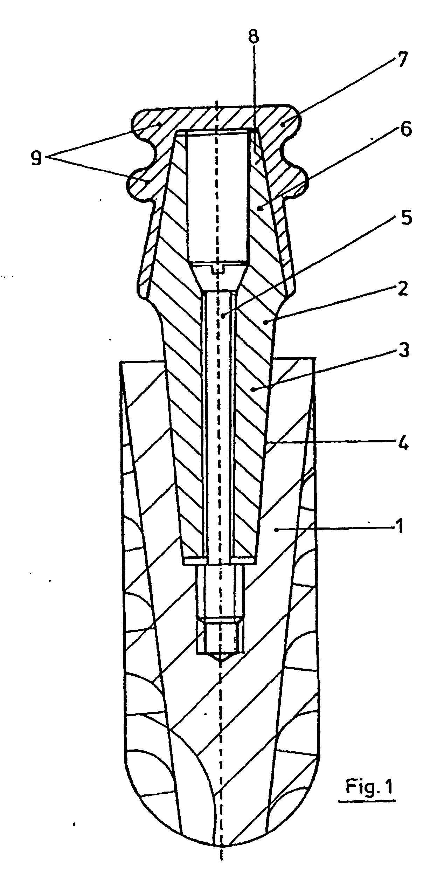

Fig. 1 zeigt ein enossales Implantat 1, das dazu bestimmt ist, in einen Kieferknochen in eine vorbereitete Gewindebohrung eingeschraubt zu werden. Nach dem Einbringen bzw. Einheilen des Implantats 1 wird ein Aufbaupfosten 2 mit einem implantatseitigen Konuszapfen 3 in eine entsprechende Konusbohrung 4 des Implantats 1 eingesetzt und mittels einer zentralen Schraube 5 gesichert.

Der Aufbaupfosten 2 weist an seinem aus dem Implantat 1 herausragenden, okklusalen Ende einen Konuszapfen 6 auf. Im fertiggestellten Zustand, d.h. nach der Verbindung mit der Zahnprothese, trägt der Konuszapfen 6 eine Konuskappe 7, die eine Konusbohrung 8 aufweist, die hinsichtlich ihrer Form, insbesondere ihres Durchmessers und des Kegelwinkels, an den Konuszapfen 6 angepaßt ist. Der Kegelwinkel des Konuszapfens 6 und der Konusbohrung 8 liegt vorzugsweise im Bereich von 4° bis 8° und beträgt beispielsweise etwa 6°.

An ihrer Außenseite weist die Konuskappe 7 umlaufende Wülste 9 als Retentions-Vorsprünge auf, die der Verankerung der Konuskappe nach ihrem Einbetten in Kunststoff dienen.

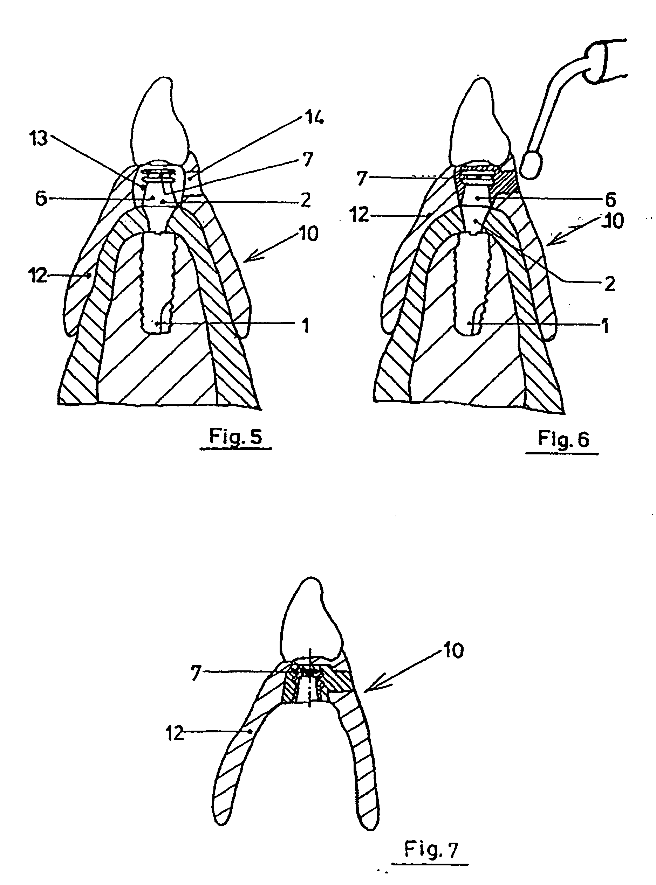

In den Fig. 2-6 sind aufeinanderfolgende Verarbeitungsschritte bei der Herstellung einer Zahnprothese 10 dargestellt, die in ihrem fertiggestellten Zustand in Fig. 7 gezeigt ist.

Fig. 2 zeigt ein in einen Kieferknochen 11 eingesetztes enossales Implantat 1, wie es in Fig. 1 dargestellt ist. Der Aufbaupfosten 2 wird in das Implantat eingesetzt und fixiert. Während ein gerader, d.h. nicht abgewinkelter Aufbaupfosten 2 in jeder beliebigen Drehstellung unmittelbar fixiert werden kann, wird ein (nicht dargestellter) abgewinkelter Aufbaupfosten zunächst im Hinblick auf die vorgegebene Einschubrichtung optimal ausgerichtet und dann in dieser Drehstellung fixiert.

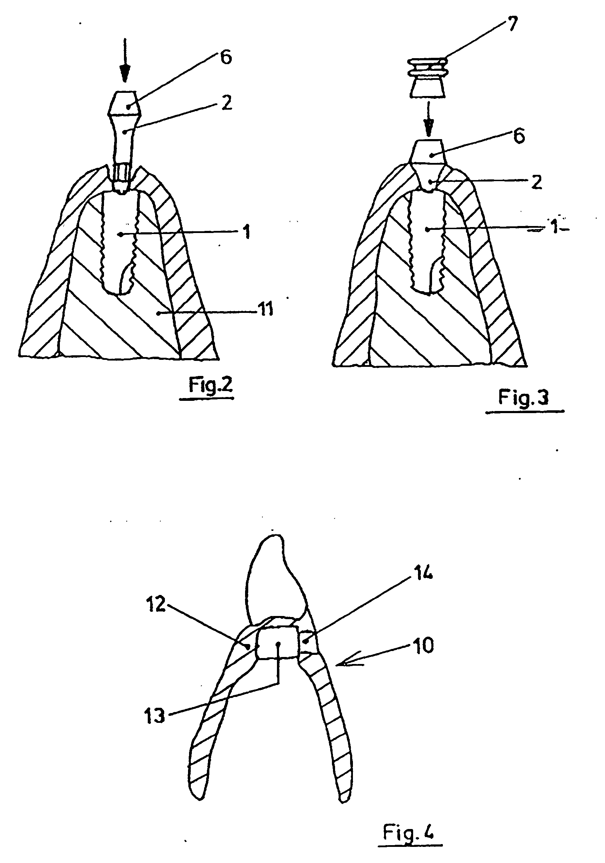

Auf den Konuszapfen 6 des Aufbaupfostens 2 wird sodann die Konuskappe 7 aufgesetzt (Fig. 3).

An der vorgefertigten (oder bereits vorhandenen) Zahnprothese 10 (Fig. 4) wird an deren Grundkörper 12 jeweils an den Stellen, an denen sich im Kiefer Implantate 1 befinden, eine Basalausnehmung 13 hergestellt, beispielsweise durch Ausschleifen. Die Basalausnehmung 13, die allseitig größer ist als die aufzunehmende Konuskappe 7, wird mit einer seitlichen Füllöffnung 14 versehen, die vorzugsweise aus lingualer Richtung ausgeschliffen wird.

Die so vorbereitete Zahnprothese 10 wird in der in Fig. 5 gezeigten Anordnung auf den Kiefer aufgesetzt, so daß sich die Konuskappen 7 jeweils in einer Basalausnehmung 13 befinden. Mit selbsthärtendem Kunststoff, der durch die Füllöffnungen 14 eingebracht wird, werden die Konuskappen 7 sodann im Grundkörper 12 der Zahnprothese 10 fixiert (Fig. 6). Nach dem Aushärten des Kunststoffs wird die Zahnprothese 10 aus dem Mund des Patienten herausgenommen und im Bereich der Basalöffnung und der Füllöffnung 14 nachgearbeitet. Die Konuskappen 7 sind in der Zahnprothese 10 in ihrer endgültigen Lage und Stellung fixiert. Damit ist einerseits sichergestellt, daß alle Konuskappen 7 hinsichtlich ihrer Lage und Ausrichtung, insbesondere auch hinsichtlich ihres gegenseitigen Abstandes exakt auf die im Kiefer des Patienten verankerten Konuszapfen 6 aller Implantate ausgerichtet sind. Andererseits ist eine so stabile Verankerung der Konuskappen im Grundkörper 12 der Zahnprothese 7 sichergestellt, daß eine vollständige, kraftübertragende Abstützung der Zahnprothese am Kiefer gewährleistet ist.

## Patentansprüche

1. Implantatgetragene Zahnprothese (10)
- mit mehreren, jeweils in einer Aufnahmebohrung (4) eines enossalen Implantats (1) aufgenommenen Aufbaupfosten (2), die jeweils einen okklusalen Konuszapfen (6) zur Verbindung mit der Zahnprothese aufweisen,
- mit in den Basalausnehmungen (13) des Grundkörpers (12) der Zahnprothese (10) eingebetteten Konuskappen (7), die jeweils eine in ihrer Form an den zugeordneten Konuszapfen (6) angepasste Konusbohrung (8)aufweisen,
**dadurch gekennzeichnet,**
**dass** jede Konuskappe (7) in eine Basalausnehmung (13) ragt, die allseitig größer als die aufzunehmende Konuskappe (7) und mit einer seitlichen Füllöffnung (14) versehen ist.

2. Implantatgetragene Zahnprothese nach Anspruch 1,
**dadurch gekennzeichnet,**
**dass** die Konuskappe (7) an ihrer Außenseite Retentions-Vorsprünge (9) aufweist.

3. Implantatgetragene Zahnprothese nach Anspruch 2,
**dadurch gekennzeichnet,**
**dass** die Retentions-Vorsprünge umlaufende Wülste (9) sind.

## Claims

1. Implant-supported dental prosthesis (10)
- with several construction posts (2) in each case accommodated in a location hole (4) of an enossal implant (1), in each case with an occlusal conical peg (6) for connection to the dental prosthesis,
- with conical caps (7) embedded in the basal recesses (13) of the main body (12) of the dental prosthesis (10), each conical cap having a conical hole (8) matching in shape the conical peg (6) assigned to it,
**characterized in**
**that** each conical cap (7) projects into a basal recess (13) which at all sides is larger than the conical cap (7) to be received and is provided with a lateral filling opening (14).

2. Implant-supported dental prosthesis according to claim 1,
**characterized in**
**that** the conical cap (7) has retention projections (9) on its outside .

3. Implant-supported dental prosthesis according to claim 2,
**characterized in**
**that** the retention projections are circumferential bulges (9).

## Revendications

1. Prothèse dentaire (10) supportée par un implant, comprenant :
- plusieurs colonnes de placement (2) logées à chaque fois dans un forage de réception (4) d'un implant intra-osseux (1), qui présentent chacune un tourillon conique occlusal (6) pour l'assemblage à la prothèse dentaire, et
- des coiffes coniques (7) noyées dans des évidements de base (13) du corps de base (12) de la prothèse dentaire (10), et qui présentent chacune un forage conique (8) de forme adaptée au tourillon conique (7) associé,
**caractérisée en ce que**
chaque coiffe conique (7) pénètre dans un évidement de base (13), qui est de tous les côtés plus grand que la coiffe conique à loger (7) et qui est pourvu d'un orifice latéral de remplissage (14).

2. Prothèse dentaire supportée par un implant selon la revendication 1,
**caractérisée en ce que**
la coiffe conique (7) présente des saillies de retenue (9) sur sa face extérieure.

3. Prothèse dentaire supportée par un implant selon la revendication 2,
**caractérisée en ce que**
les saillies de retenue sont des bourrelets périphériques (9).
